# EUROPEAN PATENT APPLICATION

(11) **EP 4 632 371 A1**
(43) Date of publication of application: **15.10.2025**
(21) Application number: 23900215.7
(22) Date of filing: 07.06.2023
(51) Int. Cl.: G01N 31/12, G01N 1/00, G01N 30/02, G01N 30/04, G01N 30/06

(54) **METHOD AND DEVICE FOR PREPARING SOLUTION FOR QUANTITATIVE ANALYSIS**

(30) Priority: 08.12.2022 JP 2022196028
(71) Applicant: Nittoseiko Analytech Co., Ltd., Kanagawa 242-0007 (JP)
(72) Inventor: HAYASHI Norio, Yamato, Kanagawa 2420007 (JP); AMEMIYA Tomokazu, Yamato, Kanagawa 2420007 (JP); MURATA Hiroyuki, Yamato, Kanagawa 2420007 (JP)
(74) Representative: Winter, Brandl - Partnerschaft mbB
(86) International application number: PCT/JP2023/021081
(87) International publication number: WO 2024/122082

(57) **Abstract**

To eliminate the time and effort required to measure and control the volumes of analyte solutions to be introduced into an analyzer in a quantitative analysis of a component with an unknown concentration contained in a sample using a calibration curve, thus enabling a highly precise quantitative analysis to be automatically performed. For a quantitative analysis of an unknown component contained in a sample using a calibration curve, the preparation of an analyte solution of a sample containing the unknown component by pouring an absorbing solution that absorbs a gas into an absorption tube and allowing the absorbing solution to absorb a sample gas produced by thermal decomposition of the sample, and the preparation of a calibration curve solution are performed in the same absorption tube. The analyte solution of the sample and the calibration curve solution are each adjusted to a fixed volume by pouring a diluent into the absorption tube and then introduced into the analyzer for analysis.

## Description

### Technical Field

The present invention relates to a method and a device for preparing analyte solutions, including calibration curve solutions, to be introduced into an apparatus that detects a component with an unknown concentration (hereinafter also referred to as "unknown component") contained in a sample in a quantitative analysis of the unknown component with an ion chromatograph analyzer or the like using a calibration curve.

### Background Art

In quantitative analysis of sulfur or halogens in a sample by ion chromatography (hereinafter also referred to as **"IC"),** the sample is subjected to thermal decomposition, and the analyte component changed into a gas is collected in an absorbing solution. Then, the absorbing solution that has absorbed the sample gas is introduced as an analyte solution into an IC analyzer.

There has been known a sample treatment device including a sample heating device that thermally decomposes a sample to produce a sample gas, an absorption tube containing an absorbing solution that absorbs the sample gas and configured to bring the sample gas introduced from the sample heating device into contact with the absorbing solution, and a diluent supply device that injects a diluent into the absorption tube as a sample treatment device that collects an analyte component in a sample as pretreatment and introduces the analyte component into an IC analyzer (see, e.g., Patent Literature 1).

### Citation List

### Patent Literature

Patent Literature 1
Japanese Patent Laid-Open No. 2011-237316

### Summary of Invention

### Technical Problem

A quantitative analysis of a sample with an IC analyzer using the sample treatment device having the above structure can be performed through the following operation.

First, a calibration curve solution is prepared in advance from a calibration curve stock solution with a known concentration, and the prepared solution is introduced into the IC analyzer for IC measurement.

Subsequently, another calibration curve solution with a different concentration than before is prepared from the same calibration curve stock solution in the same manner, and the resulting solution is introduced into the IC analyzer for IC measurement. Thus, a calibration curve is prepared from the solution concentrations and peak areas.

Then, an unknown sample with an unknown concentration is put into the sample treatment apparatus with the above structure and thermally decomposed to produce a sample gas in the sample heating device. The resulting sample gas is absorbed into the absorbing solution contained in the absorption tube, and a diluent is injected into the absorption tube up to a fixed volume. The resulting solution is introduced into the IC analyzer for IC measurement.

Then, the peak area of the unknown sample is obtained by IC measurement, the amount of the target component collected in the sample gas produced by thermal decomposition of the unknown sample is obtained from the calibration curve created above, and the concentration of the component in the unknown sample is determined from the volume of the sample introduced and the detected amount of the component. Thus, the quantitative analysis of a sample is conducted through such an operation.

In the above-described operation for the quantitative analysis of a sample, the final volume of the absorbing solution that has absorbed the sample gas and is to be introduced into the IC analyzer must be accurately known. Therefore, it takes time and effort to precisely measure and control the volume of the absorbing solution that has absorbed the sample gas, and the operation of determining the final volume of the absorbing solution is hard.

In addition, the device that automatically introduces calibration curve solutions and the absorbing solution into the IC analyzer requires a mechanism to switch between the nozzle serving as an introduction path for the calibration curve solutions and the nozzle serving as an introduction path for the absorbing solution. This makes it difficult to simplify the structure of the device and is an issue.

In view of such an issue in the known art, the present invention is intended to eliminate the time and effort required to measure and control the volumes of analyte solutions to be introduced into the analyzer in a quantitative analysis of a component contained in a sample using a calibration curve and thus to enable highly precise quantitative analysis to be automatically performed.

### Solution to Problem

The present invention to achieve the above intention is a method for preparing solutions for quantitative analysis that are analyte solutions to be introduced into an apparatus that detects an unknown component contained in a sample in a quantitative analysis of the unknown component using a calibration curve. The method comprises:
preparing an analyte solution of a sample containing the unknown component by pouring an absorbing solution that absorbs a gas into an absorption tube and allowing the absorbing solution to absorb a sample gas produced by thermal decomposition of the sample; and
preparing a calibration curve solution by pouring a known concentration solution into the same absorption tube as above.

In the preparation method of the present invention, the preparation of the analyte solution of the sample and the preparation of the calibration curve solution include pouring a diluent into the absorption tube.

The injection of the diluent into the absorption tube may be performed by pouring the diluent until a volume is reached that is detected by a liquid level sensor attached to the absorption tube, or may be performed by pouring a predetermined volume of the diluent into the absorption tube with a metering pump.

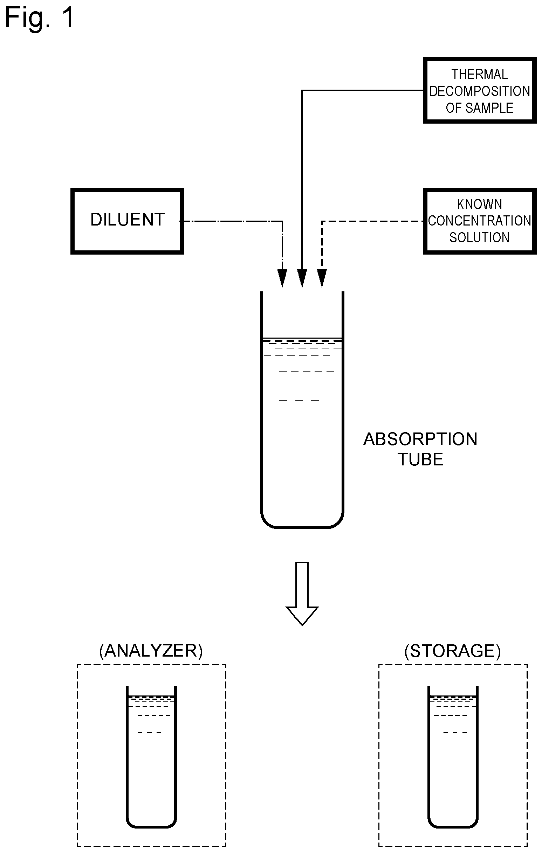

Figure 1 illustrates an outline of the operation of preparing solutions according to the preparation method of the present invention.

In the present invention, analyte solutions are prepared using a preparation system including a mechanism (device) that burns a sample for thermal decomposition to produce a sample gas, and an absorption tube.

As illustrated in the Figure, an unknown sample with an unknown concentration is thermally decomposed to produce a sample gas. The sample gas is absorbed into an absorbing solution in an absorption tube, and a diluent is added up to a fixed volume, thus preparing a solution for analyzing an unknown component.

The calibration curve solution for creating a calibration curve is prepared, using the same absorption tube as above, by pouring a known concentration solution containing a known component with a known concentration into the absorption tube and adding the diluent up to the fixed volume.

The analyte solutions prepared in the absorption tube are automatically or manually introduced into the analyzer from the absorption tube for analyzing the component contained in the solutions. The solution prepared above may be removed into another container from the absorption tube and transferred to a storage site for storage until the prepared solutions are analyzed by the analyzer.

The absorbing solution and the known concentration solution may be injected into the absorption tube automatically or manually using a pump that delivers the solutions. The diluent may also be automatically or manually injected. When the diluent is delivered into the absorption tube with a pump, a liquid level sensor may be attached to the absorption tube to detect the total volume in the tube. This enables the solution prepared in the absorption tube to be in a fixed volume without checking the volume of the diluent to be delivered to the absorption tube. In contrast, when the diluent is delivered into the absorption tube with a metering pump, the final volume of the solution prepared in the absorption tube can be determined from the volume of the absorbing solution poured into the absorption tube and the volume of the diluent delivered from the metering pump.

When a sample-absorbing solution that has absorbed a gas produced by thermal decomposition of a sample containing a component with an unknown concentration and a calibration curve solution obtained from a known concentration solution are prepared in the same absorption tube, as described above, the need for time and effort, such as burning a sample with a known concentration for creating a calibration curve can be eliminated. Also, the mechanism to automatically deliver solutions to be injected into the absorption tube with a pump and a system or mechanism to detect the volume of the solution injected into the absorption tube, if provided, can eliminate time and effort to adjust or check the final volume of the absorbing solution and calibration curve solution, consequently enabling rapid analysis operation.

The present invention is also a device for preparing solutions for quantitative analysis that are analyte solutions to be introduced into an apparatus that detects an unknown component contained in a sample in a quantitative analysis of the unknown component using a calibration curve. The device comprises:
an absorption tube in which a solution is prepared;
a sample heating means that thermally decompose a sample containing the unknown component to produce a sample gas;
a diluent injection means that injects a diluent into the absorption tube;
a known concentration solution injection means that injects a known concentration solution into the absorption tube;
a function that allows an absorbing solution in the absorption tube to absorb the sample gas produced by the sample heating means and injects the diluent into the absorption tube, thereby preparing an analyte solution of the sample; and
a function that injects a known concentration solution into the absorption tube and injects the diluent, thereby preparing a calibration curve solution.

In the device in the above configuration, furthermore, the absorption tube may be provided with a liquid level sensor.

The device may also comprise a function that automatically introduces the solutions prepared in the absorption tube into an apparatus for detecting an unknown component.

In this instance, the apparatus for detecting the unknown component may be, for example, an ion chromatograph analyzer.

The operation of quantitative analysis by introducing an unknown component contained in a sample into an IC analyzer using the solution preparation device of the present invention is performed, for example, as follows.

First, a known concentration solution and a diluent are poured into an absorption tube to prepare a calibration curve solution, and the prepared solution is introduced into the IC analyzer for an IC measurement.

Specifically, a predetermined volume (e.g., 1 mL) of a known concentration solution with a predetermined concentration (e.g., 10 ppm) is injected into the absorption tube from a known concentration solution injection means. Then, the diluent is injected into the absorption tube up to a liquid level sensor to adjust the volume to a fixed volume (X mL). The resulting solution is introduced as a calibration curve solution into the IC analyzer for an IC measurement.

Subsequently, the known concentration solution (10 ppm) in a volume (e.g., 2 mL) different than before is injected into the absorption tube from the known concentration solution injection means, and the diluent is injected up to the liquid level sensor to adjust the volume to the fixed volume (X mL). The resulting solution is introduced as a calibration curve solution into the IC analyzer for an IC measurement, and a calibration curve is created from the results of the previous measurement and this measurement.

Then, a predetermined volume (e.g., 5 mL) of the absorbing solution is held in the same absorption tube as above, and a sample containing an unknown component is thermally decomposed with a sample heating means to produce a sample gas. The sample gas is absorbed into the absorbing solution. Next, the diluent is injected into the absorption tube up to the liquid level sensor to adjust the volume to the fixed volume (X mL), and the resulting solution is introduced into the IC analyzer for an IC measurement.

The concentration of the unknown sample is determined from the result of this measurement and the previously created calibration curve.

### Advantageous Effects of Invention

In the method of the present invention for preparing solutions for quantitative analysis, a sample-absorbing solution obtained by absorbing a sample gas produced by thermal decomposition of a sample containing an unknown component and a calibration curve solution obtained from a known concentration solution are prepared in the same absorption tube, thus eliminating the time and effort to burn a sample with a known concentration to prepare an absorbing solution with a known concentration for creating a calibration curve. Also, the time and effort to adjust and check the final volume of the absorbing solution are eliminated, and accordingly, the analysis operation can rapidly be performed.

Furthermore, the solution preparation device of the present invention enables the amount and concentration of the target component in the unknown sample to be calculated even if the volume of solution up to the liquid level sensor provided at the absorption tube is unknown and also enables highly precise automatic quantitative analysis regardless of whether the unknown sample is liquid or solid while eliminating the measurement and control of liquid volume for obtaining a fixed volume of analyte solution, which conventionally takes time and effort and is troublesome.

### Brief Description of Drawings

[Figure 1] Figure 1 is an illustrative representation of the outline of the operations according to the method of the present invention for preparing solutions.
[Figure 2] Figure 2 is a schematic diagram of the structure of an embodiment of a solution preparation device of the present invention.
[Figure 3] Figure 3 is a schematic diagram of the structure of the absorption tube depicted in Figure 2.

### Description of Embodiment

A preferred embodiment of the solution preparation device of the present invention will now be described with reference to the drawings.
Figure 1 illustrates the general structure of an apparatus for quantitatively analyzing an unknown component contained in a sample with an IC analyzer. In the figure, reference numeral 1 denotes an IC analyzer; 2 denotes a solution preparation device of the present invention that prepares analyte solutions, including calibration curve solutions, to be introduced into the IC analyzer.

The IC analyzer 1, which is a known apparatus that separates ions, polar molecules, or the like from an analyte solution with an ion exchange resin and detects the electric conductivity or absorbance of the solution to analyze anions or cations, is provided with a pump, a separation column (sample loop) in a thermostatic oven, a detector, and other devices. A suppressor may further be provided between the separation column and the detector to reduce the background.

A sample introduction valve 11 is located in a solution drawing tube 71 between the IC analyzer 1 and a solution holding tube, which will be described later.

The solution preparation device 2 includes an absorption tube 3 that reserves an analyte solution and delivers the analyte solution to the IC analyzer 1, a sample heating means 4 that thermally decomposes the sample to produce a sample gas, a diluent injection means 5 that injects a diluent into the absorption tube 3, and a known concentration solution injection means 6 that injects a solution containing a known component with a known concentration into the absorption tube 3.

The absorption tube 3 is a cylindrical container made of glass or any other transparent material with an inner capacity of about 10 cm³ to 100 cm³. In the operation of heating the sample with the sample heating means 4 and collecting the sample gas, as will be described later, the absorption tube 3 contains an absorbing solution that absorbs the sample gas. The absorbing solution may be, for example, a hydrogen peroxide solution with a concentration of 0.001% to 1%, a dilute alkaline solution, or water. The absorbing solution is injected into the absorption tube using a solution delivery pump, which is not depicted. Alternatively, the absorbing solution may be manually injected.

The upper end of the absorption tube 3 is sealed with a lid to prevent the analyte solution from splashing, and the solution drawing tube 71 and a known concentration solution injection tube 79 connected to the known concentration solution injection means 6 pass through the lid.

Also, a gas blowing tube 75 is connected at the outer surface of the absorption tube 3 so that the sample gas produced in the sample heating means 4, described later, is introduced into the absorption tube through the gas blowing tube 75 and absorbed into the absorbing solution contained in the absorption tube 3. Additionally, the diluent delivered from the diluent injection means 5 is also injected into the absorption tube 3 through the gas blowing tube 75. The used absorbing solution and cleaning solution in the absorption tube 3 are discharged to the outside through a drain tube 77.

The sample heating means 4 includes a mantle tube 41 that can be supplied with oxygen and heated from the periphery with a heating means 12, an inner tube 43 that can be supplied with a carrier gas and that is inserted into the mantle tube 41 from its base end, and a boat 44 for supplying a sample inserted into the inner tube 43 from its base end. In the sample heating means 4, the mantle tube 41 and the inner tube 43 constitute a reaction tube. Typically, the mantle tube 41, the inner tube 43, and the boat 44 are made of quartz.

Ordinarily, a cylindrical electric furnace of about 0.7 kW to 1.5 kW is used as the heating means 42 that heats the mantle tube 41 and the inner tube 43, or the reaction tube. In other words, the mantle tube 41 is inserted into the cylinder of the electric furnace. An oxygen inlet tube 72 through which oxygen is supplied to the mantle tube is connected at the base end of the mantle tube 41. The oxygen inlet tube 72 extends from an oxygen container and is equipped with a flow controller along the way, but such a structure is not depicted. Also, the mantle tube 41 is equipped with a sample gas drawing tube 74 at the tip thereof to remove the sample gas produced by thermal decomposition. The sample gas drawing tube 74 is connected to the gas blowing tube 75. Typically, the inside of the tip of the mantle tube 41 is filled with quartz cotton (not depicted) to stabilize the combustion.

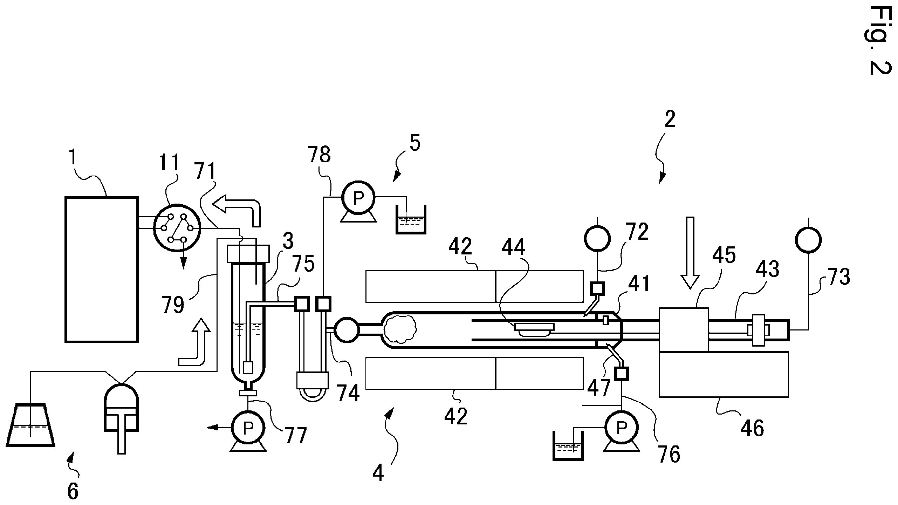

The inner tube 43 is a conduit for directing the sample gas produced by the thermal decomposition of the sample to the mantle tube 41 and is inserted in such a manner that the opening end of the inner tube (the left end in Figure 2) is positioned corresponding to substantially the center of the length of the mantle tube 41 to promote the combustion of the produced gas. The base end side of the inner tube 43, that is, the portion not inserted into the mantle tube 41 (portion with about half the length on the right side in Figure 2), is exposed to the outside from the base end of the mantle tube 41. A carrier gas inlet tube 73 through which carrier gas, such as argon, is supplied is connected at the base end of the inner tube 43. The carrier gas inlet tube 73 extends from a carrier gas container and is equipped with a flow controller along the way, but such a structure is not depicted. Also, the inner tube 43 is provided with a sample inlet port 45 in the portion thereof exposed from the mantle tube 41. The sample inlet port 45 has a structure in which a casing with a lid covers the rim of the opening formed in the inner tube 43.

The boat 44 for supplying the sample is a small dish that reciprocally moves with the sample thereon inside the inner tube 43 between the sample inlet port 45 and the vicinity of the tip of the inner tube 43 and is formed in the shape of a shallow, flattened, narrow box, for example. The boat 44 is placed at the end of an operation rod that is reciprocally moved by a boat controller 46. Specifically, a short cylindrical metal piece to be engaged loosely with the inner periphery of the inner tube 43 is attached at the base end of the operation rod, and the outer periphery of the inner tube 43 is provided thereon with a moving member that is defined by a ring-shaped magnet or electromagnet loosely engaged with the inner tube and moved linearly by a drive mechanism of the boat controller 46 (e.g., a drive mechanism including a servomotor and a rack mechanism). The operation rod is configured to move inside the inner tube 43 following the movement of the moving member.

Also, the sample heating means 4 includes a water vapor generation section with a jacket structure to supply a sufficient amount of water vapor to the inner tube 43. The water vapor generation section is structured such that a water supply tube 76 connected to a water supply means is connected to the outer periphery of the inner tube 43 at a position corresponding to the base end of the mantle tube 41 so that water can be supplied from the outside, thus generating water vapor using residual heat from the heating means 42. The inner tube 43 has a hole (not depicted) for introducing water vapor in the wall thereof, which is the upper wall of the inner tube in a horizontal position, and water vapor generated in the water vapor generation section is directed to the reaction region of the inner tube 43 through the hole.

The diluent injection means 5 injects water, or diluent, into the solution holding tube 3. The diluent delivered from the diluent injection means 5 is injected into the absorption tube 3 through a diluent delivery tube 78 and the gas blowing tube 75. A pump to deliver the diluent may be used as the diluent injection means 5. For example, the diluent may be delivered to the absorption tube 3 using a metering pump, such as a syringe pump.

The known concentration solution injection means 6 injects a known sample solution containing a known component with a known concentration into the absorption tube 3, and the known concentration solution is injected into the solution holding tube 3 through the known concentration solution injection tube 79. The known concentration solution injection means 6 may be, for example, a syringe pump that can inject a desired volume into the absorption tube 3.

The known concentration solution is a solution in which a known amount of a component subjected to measurement is dissolved and may be a commercially available reference solution, a certified material, or a solution prepared from a material and solution as appropriate.

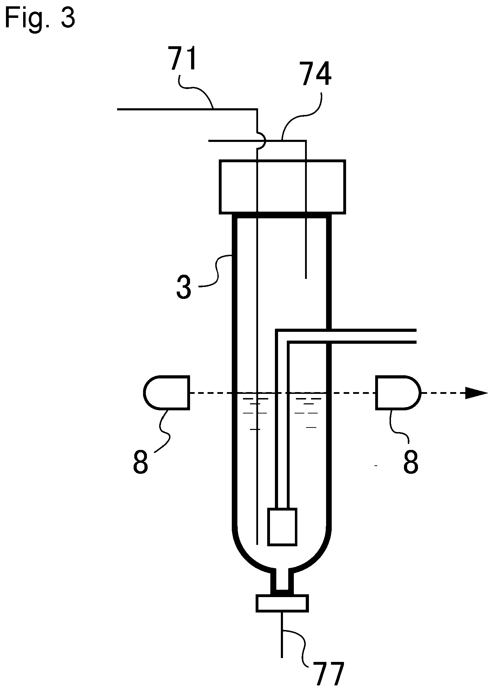

The liquid level sensor 8, 8 attached to the absorption tube 3, as depicted in Figure 3, may be, for example, a photosensor including a light source, such as a light emitting diode or a semiconductor laser, and a photodiode, an optical array, or any other lightreceiving element that detects the intensity of light from the light source that has passed through the solution holding tube 3.

A liquid level detection means of the absorption column 2 includes an amplifier that amplifies the signals output from the liquid level sensor 8, 8, a signal converter that digitizes output signals, and an arithmetic processor that arithmetically processes the resulting digital signals, but these are not depicted. The arithmetic processor is located in a control device, which will be described later but is not depicted.

In the solution preparation device 2 of the present embodiment, the above-described diluent injection means 5 and known concentration solution injection means 6 include respective water pumps and are configured so that the diluent and the known concentration solution are automatically injected into the absorption tube 3. The absorbing solution is also automatically injected into the absorption tube 3 from an absorbing solution reservoir by a water pump, not depicted. Additionally, the analyte solution prepared in the absorption tube 3 is also automatically introduced into the IC apparatus 1 using a water pump, not depicted.

The operations of the members constituting the solution preparation device 2, including the sample heating means 4, the diluent injection means 5, the known concentration solution injection means 6, the sluice valves or other valves, and the liquid level sensor 8, 8 are controlled by a control device including a computer in which a given program is installed and are configured to fulfill the functions to prepare solutions for quantitative analysis, including the function that allows the absorbing solution in the absorption tube 3 to absorb a sample gas produced in the sample heating means 2 and injects a diluent into the absorption tube 3, thereby preparing the analyte solution of a sample, and the function that injects a known concentration solution and injects the diluent into the absorption tube 3, thereby preparing a calibration curve solution.

In other words, in the step of preparing an analyte solution by thermal decomposition of a sample containing an unknown component, an absorbing solution is injected into the absorption tube with the control of the control device, and the sample gas produced by automatic thermal decomposition of a sample is absorbed into the absorbing solution. Then, the diluent is injected from the diluent injection means 5 into the absorption tube 3, and when the solution in the absorption tube 3 reaches the liquid level sensor 8, 8, the control device stops the operation of the diluent injection means 5 according to the signal from the liquid level sensor 8, 8. Thus, the analyte solution prepared in the absorption tube 3 is adjusted to a fixed volume.

Also, in the step of preparing a calibration curve solution from a known concentration solution, the known concentration solution is injected into the absorption tube 3 from the known concentration solution injection means 6 with the control of the control device, and when the injected solution reaches a predetermined volume, the control device stops the operation of the known concentration solution injection means 6 injecting the solution. Then, the control device operates the diluent injection means 5 to inject the diluent into the absorption tube 3, and when the solution in the absorption tube 3 reaches the liquid level sensor 8, 8, the control device stops the operation of the diluent injection means 5 according to the signal from the liquid level sensor 8, 8. Thus, the calibration curve solution prepared to a predetermined concentration in the absorption tube 3 is adjusted to the fixed volume.

The analyte solution and calibration curve solution prepared to the fixed volume in the absorption tube 3 are introduced into the IC analyzer 1 by a water pump, not depicted, operated by the control device, and subjected to IC measurement.

The operation of quantitative analysis of a sample containing an unknown component using the solution preparation device 2 of the present embodiment as described above is performed, for example, as follows.

First, a known concentration solution is poured into the absorption tube 3 to prepare a calibration curve solution, and the prepared solution is introduced into the IC analyzer 1 for IC measurement.

Specifically, a predetermined volume of the known concentration solution is injected into the absorption tube 3 from the known concentration solution injection means 6. Then, a diluent is injected from the diluent injection means 5 into the absorption tube 3 up to the liquid level sensor 8, 8 to adjust the volume to a fixed volume. The resulting solution is introduced as a calibration curve solution into the IC analyzer 1 for an IC measurement. The absorption tube 3 is configured to be supplied with oxygen gas and argon gas, but such a structure is not depicted. The injection of the known concentration solution is performed with the supply of both gases temporarily interrupted. After the diluent is further injected, both gases are supplied to the absorption tube 3, thereby mixing the known concentration solution and the diluent in the absorption tube 3.

Subsequently, the known concentration solution in a volume different than before is injected into the absorption tube 3 from the known concentration solution injection means 6, and the diluent is injected up to the liquid level sensor 8, 8 from the diluent injection means 5 to adjust the volume to the fixed volume. The resulting solution is introduced as a calibration curve solution into the IC analyzer 1 for an IC measurement, and a calibration curve is created from the results of the previous measurement and this measurement.

Then, a predetermined volume of the absorbing solution is held in the absorption tube 3, and a sample with an unknown concentration is thermally decomposed in the sample heating means 4 to produce a sample gas. The resulting sample gas is absorbed into the absorbing solution. Then, with the supply of oxygen gas and argon gas interrupted, the diluent is injected from the diluent injection means 5 into the absorption tube 3 up to the liquid level sensor 8, 8 to adjust the volume to the fixed volume. Both the gases are then supplied into the absorption tube 3 to mix the solutions, and the resulting solution is introduced into the IC analyzer 1 for an IC measurement.

The concentration of the unknown sample is determined from the result of this measurement and the previously created calibration curve.

The solution preparation device thus structured enables the amount and concentration of the target component in an unknown sample to be calculated even if the volume of solution up to the liquid level sensor attached to the absorption tube is unknown and, accordingly, does not require the measurement and control of the volume of solution for obtaining a fixed volume of analyte solution, which conventionally takes time and effort and is troublesome, thus enabling highly precise automatic quantitative analysis regardless of whether the unknown sample is liquid or solid.

Furthermore, the following specific effects can be produced in practice.

That is, since the solution preparation device has a function to automatically dilute the known concentration solution, which is a calibration curve stock solution, there is no need to prepare a calibration curve solution in advance.

Since a diluent is added to each of the calibration curve solution and the absorbing solution that absorbed the sample gas of a sample containing an unknown component and the volumes of both solutions are adjusted to a fixed volume with the liquid level sensor attached to the same absorption tube, there is no need to determine the volume up to the liquid level sensor.

Also, since the function of injecting the absorbing solution into the absorption tube can be used when the calibration curve solution is prepared, the calibration curve solution can be prepared by adding the absorbing solution that has absorbed the sample gas of the unknown sample thereto. Thus, the compositions of the analyte solution of the unknown sample and the calibration curve solution can be adjusted to the same and then introduced into the IC analyzer for measurement.

When the volume of the calibration curve solution to be introduced into the IC analyzer is varied for creating a calibration curve, a problem of fluctuating the baseline may arise as the volume of the introduced solution is varied. In the solution preparation device as structured above, the volume of solution introduced into the IC analyzer does not vary and remains constant, and only the concentration of the calibration curve solution is varied. Therefore, the baseline does not fluctuate, and there is no risk of reducing the analytical precision. Also, since the dilution rate of the known concentration solution can be increased, compared to the case of creating the calibration curve by varying the volume of the solution to be introduced into the IC analyzer, the calibration curve can be created over a wide range of concentrations.

When the method of performing an IC measurement of a test curve solution prepared in advance and then performing an IC measuring of an absorbing solution that has absorbed a burned unknown sample is performed using a device including a mechanism that automatically introduces solution into an IC measurement apparatus, a valve is required to switch a nozzle for sucking the calibration curve solution and a nozzle for sucking the analyte solution prepared by sucking the sample gas. However, the solution preparation device structured as depicted does not require any switching valve because the calibration curve solution and the analyte solution of the unknown sample are placed in the same absorption tube and can each be introduced into the IC analyzer.

### Examples

The effectiveness of the method of the present invention for preparing solutions for quantitative analysis was examined by quantitatively analyzing samples.

The fluorine, chlorine, and sulfur contents of a sample that is a solution of (4-chloro-3-trifluoromethyl)phenylthiourea in ethanol (F: 179.8 µg/mL, Cl: 111.8 µg/mL, S: 101.1 µg/mL) were analyzed with a combustion ion chromatograph analyzer.

The sample was analyzed by the method of IC analysis using a calibration curve solution prepared in the absorption tube of the solution preparation device of the above-described embodiment and the known method of IC analysis using a calibration curve solution manually prepared in a measuring flask, and the analysis results from the two methods were compared in terms of differences. Three solutions (samples) were prepared by each method and subjected to IC analysis. The results are presented in Table 1.

Table 1 shows that the results obtained from the analysis method to which the present invention is applied are comparable to those obtained from the known analysis method. Thus, it is confirmed that the present invention enables analysis with the same level of precision as the known method.

**[Table 1]**

| | Content (µg/mL) | | | | | |
|---|---|---|---|---|---|---|
| | F | | Cl | | S | |
| Sample No. | Present invention | Known method | Present invention | Known method | Present invention | Known method |
| 1 | 177.7 | 177.6 | 110.3 | 111.1 | 101.6 | 100.9 |
| 2 | 178.5 | 178.6 | 112.2 | 111.7 | 103.1 | 101.1 |
| 3 | 177.4 | 178.4 | 111.0 | 111.5 | 102.7 | 101.1 |
| Average | 177.9 | 178.2 | 111.2 | 111.4 | 102.5 | 101.0 |
| Relative standard deviation (%) | 0.3 | 0.3 | 0.9 | 0.2 | 0.8 | 0.1 |

The above-described and illustrated structure and component members of the solution preparation device are examples, and the present invention is not limited to the described and illustrated structure or form and can be implemented in other appropriate structures or forms.

The present invention can be implemented as various methods and devices for preparing solutions for various analyzers in which an unknown component in a sample is quantitatively analyzed using a calibration curve, including ion chromatograph analyzers.

### Reference Signs List

1 IC analyzer, 2 solution preparation device, 3 absorption tube, 4 sample heating means, 5 diluent injection means, 6 known concentration solution injection means, 8 liquid level sensor

## Claims

1. A method for preparing solutions for quantitative analysis that are analyte solutions to be introduced into an apparatus that detects an unknown component contained in a sample in a quantitative analysis of the unknown component using a calibration curve, the method comprising:
preparing an analyte solution of a sample containing the unknown component by pouring an absorbing solution that absorbs a gas into an absorption tube and allowing the absorbing solution to absorb a sample gas produced by thermal decomposition of the sample; and
preparing a calibration curve solution by pouring a known concentration solution into the same absorption tube as above.

2. The method for preparing solutions for quantitative analysis according to claim 1, wherein the preparation of the analyte solution of the sample and the preparation of the calibration curve solution include pouring a diluent into the absorption tube.

3. The method for preparing solutions for quantitative analysis according to claim 2, wherein the diluent is poured until a volume is reached that is detected by a liquid level sensor attached to the absorption tube.

4. The method for preparing solutions for quantitative analysis according to claim 2, wherein a specific volume of the diluent is poured into the absorption tube with a metering pump.

5. A device for preparing solutions for quantitative analysis that are analyte solutions to be introduced into an apparatus that detects an unknown component contained in a sample in a quantitative analysis of the unknown component using a calibration curve, the device comprising:
an absorption tube in which a solution is prepared;
a sample heating means that thermally decompose a sample containing the unknown component to produce a sample gas;
a diluent injection means that injects a diluent into the absorption tube;
a known concentration solution injection means that injects a known concentration solution into the absorption tube;
a function that allows an absorbing solution in the absorption tube to absorb the sample gas produced by the sample heating means and injects the diluent into the absorption tube, thereby preparing an analyte solution of the sample; and
a function that injects a known concentration solution into the absorption tube and injects the diluent, thereby preparing a calibration curve solution.

6. The device for preparing solutions for quantitative analysis according to claim 5, wherein the absorption tube is provided with a liquid level sensor.

7. The device for preparing solutions for quantitative analysis according to claim 5 or 6, wherein the device comprises a function that automatically introduces the solutions prepared in the absorption tube into an apparatus for detecting an unknown component.

8. The device for preparing solutions for quantitative analysis according to claim 7, wherein the apparatus for detecting the unknown component is an ion chromatograph analyzer.
